# EUROPEAN PATENT APPLICATION

(11) **EP 1 942 499 A1**
(43) Date of publication of application: **09.07.2008**
(21) Application number: 07025030.3
(22) Date of filing: 21.12.2007
(51) Int. Cl.: G11B 7/135, G11B 7/00

(54) **Optical pickup comprising liquid crystal element with diffraction and phase shift electrodes**

(30) Priority: 26.12.2006 JP 2006349804
(71) Applicant: Funai Electric Co., Ltd., Daito-shi, Osaka 574-0013 (JP)
(72) Inventor: Hamaoka, Mika, Daito-shi Osaka 574-0013 (JP); Nishioka, Ken, Daito-shi Osaka 574-0013 (JP); Sasabe, Mitsuyoshi, Daito-shi Osaka 574-0013 (JP)
(74) Representative: Grünecker, Kinkeldey, Stockmair & Schwanhäusser Anwaltssozietät

(57) **Abstract**

The present invention aims to correct the spherical aberration and ensure the working distance (WD) and furthermore to obtain satisfactory recording and reproducing property by shaping the optical spot (SP) formed on the disc surface (13a). A liquid crystal element (6) for correcting spherical aberration includes diffraction electrodes (66) for converting the light beam to a divergent light when reproducing a CD, and phase shift electrodes (67) for providing a phase difference to the light beam when reproducing a BD. When reproducing a BD, voltage is applied to the diffraction electrodes (66) as well as the phase shift electrodes (67) to diverge the light beam and lower the light intensity of the central portion, thereby shaping the optical spot (SP) formed on the disc (13).

## Description

### BACKGROUND OF THE INVENTION

### 1. Field of the Invention

The present invention relates to an optical pickup mounted on a DVD recorder and the like, and in particular, to an optical pickup including a liquid crystal element having an electrode pattern for correcting aberration.

### 2. Description of the Related Art

In an optical pickup for performing recordation and reproduction of information on the optical disc such as a CD (Compact Disc), a DVD (Digital Versatile Disc), and a BD (Blu-ray Disc; registered trademark), the specification of objective lens and light source differs depending on the type of optical disc. For instance, the numerical aperture (NA) of the objective lens is 0.50 for a CD, 0.65 for a DVD, and 0.85 for a BD, and the wavelength of the laser light is 780 nm for a CD, 650 nm for a DVD, and 405 nm for a BD.

As mentioned above, the numerical aperture of the objective lens and the wavelength of the laser light differ depending on the type of optical disc. If different optical pickup is used for each disc, the number of components increases thereby leading to enlargement of device and increase in cost. Therefore, an optical pickup compatible to a plurality of wavelengths that can correspond to various optical discs with one optical pickup is being developed. In order to reduce the number of components, enhance the assembly workability, and achieve miniaturization, the optical pickup mounted with only one objective lens is also being put to practical use.

However, when performing recordation and reproduction on a plurality of types of optical discs with one objective lens, the thickness of the protective layer which protects the recording layer of the disc differs depending on the type of optical disc, which becomes a cause of occurrence of spherical aberration in the optical system. Such spherical aberration degrades the optical spot formed on the optical disc, and lowers the recordation and reproduction performance. Furthermore, the distance from the objective lens to the protective layer, that is, the working distance in a case where the light beam is collected on the recording layer by the objective lens becomes particularly small for a CD due to the difference in thickness of the protective layer, thereby rising a problem of collision of the objective lens with the optical disc.

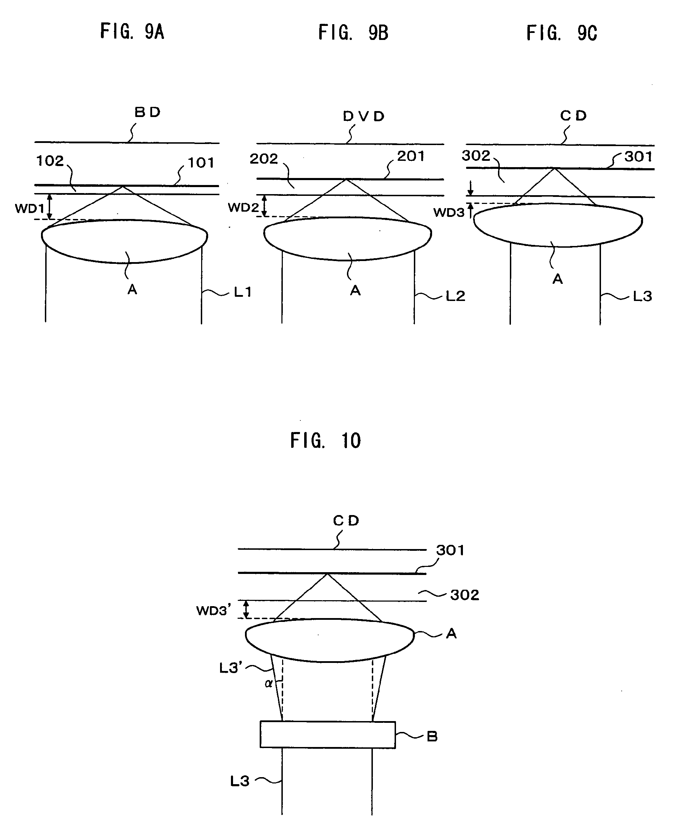

Fig. 9 is a view describing the problem of spherical aberration and working distance. Fig. 9A shows a case where the optical disc is a BD, where 101 is the recording layer and 102 is the protective layer. Fig. 9B shows a case where the optical disc is a DVD, where 201 is the recording layer and 202 is the protective layer. Fig. 9C shows a case where the optical disc is a CD, where 301 is the recording layer and 302 is the protective layer. A is the objective lens, L1 to L3 are light beams (laser lights) of each wavelength, and WD1 to WD3 are working distances. Here, assuming that the objective lens A is suitably designed for a BD, spherical aberration does not occur for a BD, but spherical aberration occurs for a DVD and a CD since the protective layers 202, 302 are thicker than the protective layer 102. Even for a BD, correction of spherical aberration is required if a BD has a plurality of recording layers. Furthermore, the working distance WD3 becomes very small for a CD having the thickest protective layer 302, and the objective lens A might collide with the disc surface.

As shown in Fig. 10, when recording and reproducing a CD, it is known that a liquid crystal element B including an electrode configuring a diffraction pattern is electrically controlled, and the light beam L3 is diverged by an angle α so as to enter the objective lens A as divergent light L3', thereby correcting the spherical aberration (see e.g., Japanese Unexamined Patent Publication No. 2006-252655). In this case, since the divergent light L3' enters the objective lens A, a large working distance WD3' can be ensured compared to that in Fig. 9C (WD3' > WD3), and the objective lens A is avoided from colliding with the disc surface. However, the spherical aberration of a BD having a plurality of recording layers cannot be corrected with only the means of Fig. 10.

It is known that spherical aberration can be corrected by electrically controlling the liquid crystal element including an electrode configuring a phase shift pattern and providing a phase difference to the light beam entered to the objective lens (see e.g., Japanese Unexamined Patent Publication No. 2006-12344 and Japanese Unexamined Patent Publication No. 2005-202323). Through the use of such a method, the spherical aberration can be corrected even for a BD having a plurality of recording layers, but two liquid crystal elements, one for generating divergent light and the other for phase shift, are required to ensure the working distance while correcting the spherical aberration of a CD and to correct the spherical aberration of each recording layer of a BD, which leads to increase in number of components and increase in cost.

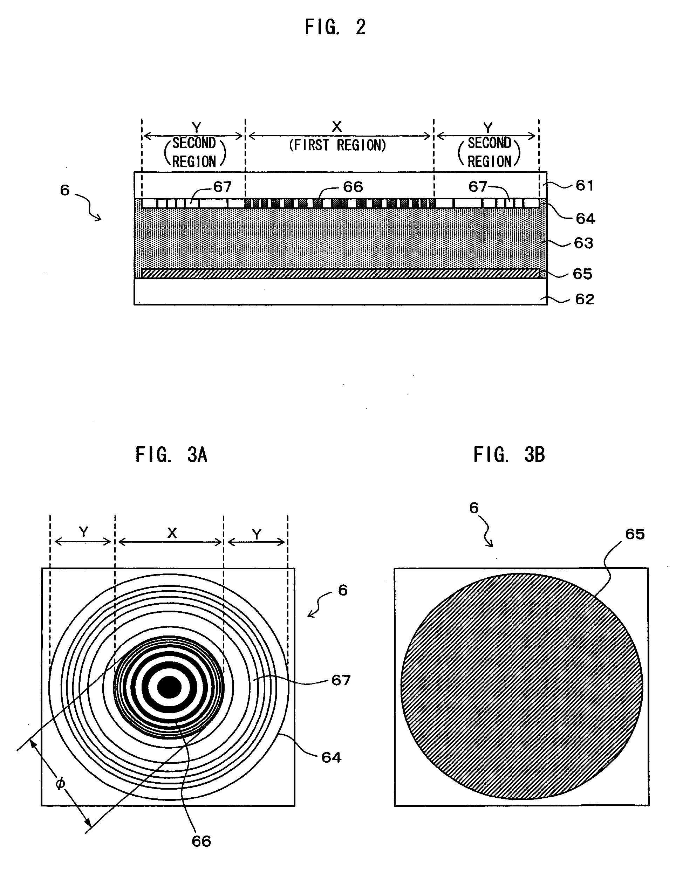

The applicant thus proposed an optical pickup capable of correcting the spherical aberration and ensuring the working distance in a CD, and also capable of correcting the spherical aberration in each recording layer of a BD with one liquid crystal element (Japanese Patent Application No. 2006-227900). The liquid crystal element of the invention disclosed in the previous application includes a concentric electrode pattern, as shown in Fig. 3A, where an electrode 66 of a diffraction pattern for generating the divergent light is arranged in a first region X on the inner side, and an electrode 67 of phase shift pattern is arranged in a second region Y on the outer side. Through the use of such liquid crystal element, the spherical aberration can be corrected and the working distance can be increased for a CD since divergent light is generated similarly to the conventional art by applying voltage to the electrode 66 of diffraction pattern. In a case of a BD, the spherical aberration of each recording layer of a BD can be corrected by turning OFF the voltage of the electrode 66 of diffraction pattern, and appropriately controlling the voltage of the electrode 67 of phase shift pattern.

### SUMMARY OF THE INVENTION

The present invention is developed from the invention of the previous application to shape the optical spot formed on the disc surface and obtain a more satisfactory recording and reproducing property while exerting all the advantages of the previous invention.

The present invention provides an optical pickup including a plurality of light sources for projecting light beams having different frequencies to at least two types of optical disc; an objective lens for collecting the light beam projected from each light source onto a disc surface of each optical disc; and a liquid crystal element for correcting spherical aberration arranged in front of the objective lens when seen from the light source; wherein the liquid crystal element includes diffraction electrodes for converting the light beam to divergent light when reproducing the optical disc in which numerical aperture used is small, and phase shift electrodes for providing a phase difference to the light beam when reproducing the optical disc in which numerical aperture used is large; and voltage is applied to the diffraction electrodes as well as the phase shift electrodes when reproducing the optical disc in which numerical aperture used is large.

In the present invention, since the diffraction electrodes and the phase shift electrodes are arranged in one liquid crystal element, correction of spherical aberration can be performed by diverging the light beam with the diffraction electrodes and the working distance can be sufficiently ensured with respect to the optical disc in which the numerical aperture used is small such as a CD. The phase distribution is produced in the light beam and the spherical aberration can be easily corrected by controlling the voltage to be applied to the phase shift electrodes even if the optical disc in which the numerical aperture used is large such as a BD has a plurality of recording layers. In addition, when reproducing the optical disc in which the numerical aperture used is large, the light intensity at the central portion of the light beam is lowered using the diffraction electrodes to shape the optical spot collected on the disc, whereby satisfactory reproduction signal can be obtained.

In the optical pickup of the present invention, a common electrode facing the diffraction electrodes and the phase shift electrodes may be arranged; the common electrode includes a first electrode facing the diffraction electrodes, and a second electrode arranged so as to surround the first electrode; and voltage is applied between the first electrode and the diffraction electrodes when reproducing the optical disc in which numerical aperture used is large. According to this, since the diffraction of light beam occurs only near the middle of the liquid crystal element, only the necessary portion in the common electrode can be selected and driven, thereby a design to shape the light beam more efficiently can be carried out.

A typical embodiment of the present invention provides an optical pickup including a plurality of light sources for projecting light beams having different frequencies to each optical disc of a CD, a DVD, and a BD; an objective lens for collecting the light beam projected from each light source onto a disc surface of each optical disc; and a liquid crystal element for correcting spherical aberration arranged in front of the objective lens when seen from the light source; wherein the liquid crystal element includes diffraction electrodes having a concentric diffraction pattern arranged in a first region on the inner side, phase shift electrodes having a concentric region arranged in a second region on the outer side, and a common electrode facing the diffraction electrodes and the phase shift electrodes. When reproducing a CD, same voltage is applied between each diffraction electrode and the common electrode to diffract the light beam entering the first region and convert the light beam to a divergent light diverged by a predetermined angle. When reproducing a BD, voltage is individually applied between each region of the phase shift electrode and the common electrode to provide a phase difference to the light beam passing through the region while changing an index of refraction in each region, and a predetermined voltage is applied between the diffraction electrodes and the common electrode to lower a light transmissivity of the first region and shape an optical spot formed on the disc.

According to the present invention, the spherical aberration can be corrected and the working distance can be ensured with respect to the optical disc in which the numerical aperture used is small such as a CD, and the spherical aberration in a case where a plurality of recording layers exists can be easily corrected with respect to the optical disc in which the numerical aperture used is large such as a BD by means of one liquid crystal element. Furthermore, the optical spot in reproducing a BD and the like can be shaped using the divergence of the light beam by the diffraction electrodes, and thus the reproduction performance can be enhanced.

### BRIEF DESCRIPTION OF THE DRAWINGS

Fig. 1 is a schematic configuration view of an optical pickup according to an embodiment of the present invention;
Fig. 2 is a cross sectional view showing a detailed configuration of a liquid crystal element;
Fig. 3 is a top view and a bottom view showing a detailed configuration of the liquid crystal element;
Fig. 4 is a view describing correction of spherical aberration by a diffraction pattern;
Fig. 5 is a view describing correction of spherical aberration by a phase shift pattern;
Fig. 6 is a view showing an optical spot collected on a disc;
Fig. 7 is a view showing a liquid crystal element according to another embodiment of the present invention;
Fig. 8 is a waveform chart of a reproduction signal;
Fig. 9 is a view describing the problem of spherical aberration and working distance; and
Fig. 10 is a view describing correction of spherical aberration by divergence of light beam.

### DETAILED DESCRIPTION OF THE PREFERRED EMBODIMENTS

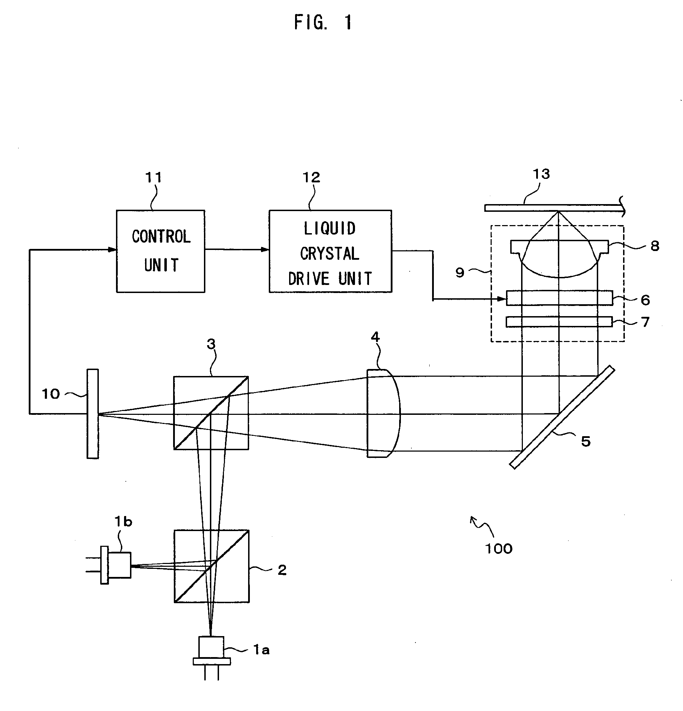

Embodiments of the present invention will now be described with reference to the drawings. Fig. 1 is a schematic configuration view of an optical pickup according to the embodiment of the present invention. An example of an optical pickup 100 of 3-wavelength compatible type that can correspond to three types of optical discs such as a CD, a DVD, and a BD will be described.

In Fig. 1, a light source 1a for a CD and a DVD includes two semiconductor lasers for projecting an infrared laser having a wavelength of 780 nm and a red laser light having a wavelength of 650 nm. A light source 1b for a BD includes a semiconductor laser for projecting a blue laser light having a wavelength of 405 nm. A prism 2 transmits and straightly advances the laser light from the light source 1a, and reflects the laser light from the light source 1b to change the light path by 90°. A prism 3 reflects the light transmitted through the prism 2 towards the collimator lens 4 side at an angle of 90°, and transmits the light from the collimator lens 4. The collimator lens 4 is a lens for converting the laser light reflected by the prism 3 to parallel light. An up mirror 5 reflects the light passed through the collimator lens 4 upward at an angle of 90°.

A liquid crystal element 6 corrects the spherical aberration occurring in recordation and reproduction of a CD and a BD. A phase shift element 7 corrects the spherical aberration occurring in recordation and reproduction of a DVD. An objective lens 8 collects the incident laser light on the disc surface. A movable actuator 9 incorporates the liquid crystal element 6, the phase shift element 7, and the objective lens 8. A light receiving unit 10 receives light reflected by the disc surface of the optical disc 13 through each optical component 3 to 8. A control unit 11 processes the signal output from the light receiving unit 10 and performing a predetermined control. A liquid crystal drive unit 12 drives the liquid crystal element 6 based on the output from the control unit 11.

The laser light projected from the light sources 1a, 1b are reflected by the prism 3 at 90° through the prism 2, converted to parallel light by the collimator lens 4, and then collected on the disc surface of the optical disc 13 through the up mirror 5, the phase shift element 7, the liquid crystal element 6, and the objective lens 8, thereby forming a microscopic optical spot. The reflected light from the disc surface of the optical disc 13 is received by the light receiving unit 10 through each optical component 3 to 8. The signal output from the light receiving unit 10 is provided to the control unit 11. The control unit 11 controls the liquid crystal drive unit 12 based on the output signal of the light receiving unit 10, and the liquid crystal drive unit 12 controls the liquid crystal element 6 to be hereinafter described. The control unit 11 detects the focus error and the tracking error based on the output signal of the light receiving unit 10, and performs servo control such as focus control and tracking control. The servo control system is not shown in Fig. 1 as the servo control system is not directly related to the present invention.

Figs. 2 and 3 are views showing a detailed configuration of the liquid crystal element 6. Fig. 2 is a cross sectional view of the liquid crystal element 6, Fig. 3A is a top view of the liquid crystal element 6, and Fig. 3B is a bottom view of the liquid crystal element 6.

As shown in Fig. 2, the liquid crystal element 6 includes a pair of transparent substrates 61, 62 facing each other with a liquid crystal 63 in between, and transparent electrodes 64, 65 respectively arranged on each substrate 61, 62. The liquid crystal 63 is made up of nematic liquid crystals. When voltage is applied to the transparent electrodes 64, 65, the orientation direction of the liquid crystal molecules of the voltage applied portion changes and the index of refraction changes. The transparent electrodes 64, 65 are made up of, for example, ITO (Indium Tin Oxide), and supported by the transparent substrates 61, 62, respectively. The transparent substrates 61, 62 are configured by glass etc.

As shown in Fig. 3A, the transparent electrode 64 configures a concentric electrode pattern. The electrodes 66 arranged in the first region X on the inner side are electrodes (hereinafter referred to as "diffraction electrode") forming a diffraction pattern for diverging the light beam. The electrodes 67 arranged in the second region Y on the outer side are electrodes (hereinafter referred to as "phase shift electrode") forming a phase shift pattern for providing phase difference to the light beam. As shown in Fig. 3B, the transparent electrode 65 is a single electrode (hereinafter referred to as "common electrode") that does not configure a special pattern. A predetermined voltage is applied between each transparent electrode 64 and the common electrode 65 by the liquid crystal drive unit 12 in Fig. 1.

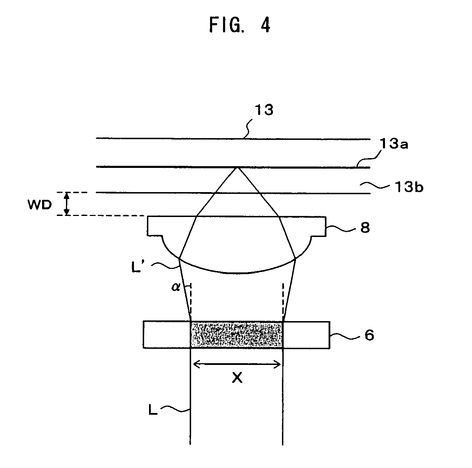

The first region X is arranged at the central portion of the liquid crystal element 6, and is used as a spherical aberration correcting region for a CD in which the numerical aperture used is small. The diffraction electrodes 66 arranged in the first region X are formed into a concentric diffraction pattern. The liquid crystal 63 has a uniform index of refraction n1 over the entire region of the first region X when voltage is not applied between the diffraction electrodes 66 and the common electrode 65, and is oriented so as not to optically act on the light beam passing therethrough. Thus, the light beam transmits through the first region X without being diffracted. If same voltage is applied between each diffraction electrode 66 and the common electrode 65 by the liquid crystal drive unit 12, the orientation direction of the portion sandwiched between the electrodes in the liquid crystal 63 changes, and the index of refraction of the relevant portion changes from n1 to n2. Therefore, in the first region X, the portion in which the index of refraction is n1 and the portion in which the index of refraction is n2 are concentrically formed in an alternate manner. Thus, as shown in Fig. 4, the light beam L entering the first region X is converted to divergent light L' diverged by angle α through diffraction, and entered to the objective lens 8. As a result, when the optical disc 13 is a CD, the spherical aberration due to the thickness of the protective layer 13b can be corrected, and the sufficient working distance WD can be ensured when light beam is collected on the recording layer 13a, similarly to a case of Fig. 10.

The second region Y is arranged so as to surround the first region X, and is used as a spherical aberration correcting region for a BD in which the numerical aperture used is large. The phase shift electrodes 67 arranged in the second region Y are formed so as to include a plurality of concentric regions. Each region is arranged with a gap so as not to contact to each other. The portion of solid line circle in the second region Y of Fig. 3A corresponds to the gap. The voltage is individually applied between each region of the phase shift electrodes 67 and the common electrode 65 by the liquid crystal drive unit 12 in Fig. 1.

In the second region Y, the liquid crystals 63 has a uniform index of refraction n1 over the entire region if the voltage is not applied between the phase shift electrode 67 and the common electrode 65, and is orientated so as not to optically act on the light beam passing therethrough, similarly to a case of the first region X. Thus, the light beam transmits through the second region Y as it is. If voltage is applied between the phase shift electrodes 67 and the common electrode 65 by the liquid crystal drive unit 12, the orientation direction of the portion sandwiched between the electrodes in the liquid crystal 63 changes and the index of refraction of the relevant portion changes. In this case, as described above, the voltage can be individually applied to the concentric region of the phase shift electrode 67, and thus the index of refraction in each region can be individually controlled by adjusting the value of each voltage. Consequently, phase difference is produced in the light beam passing through each region.

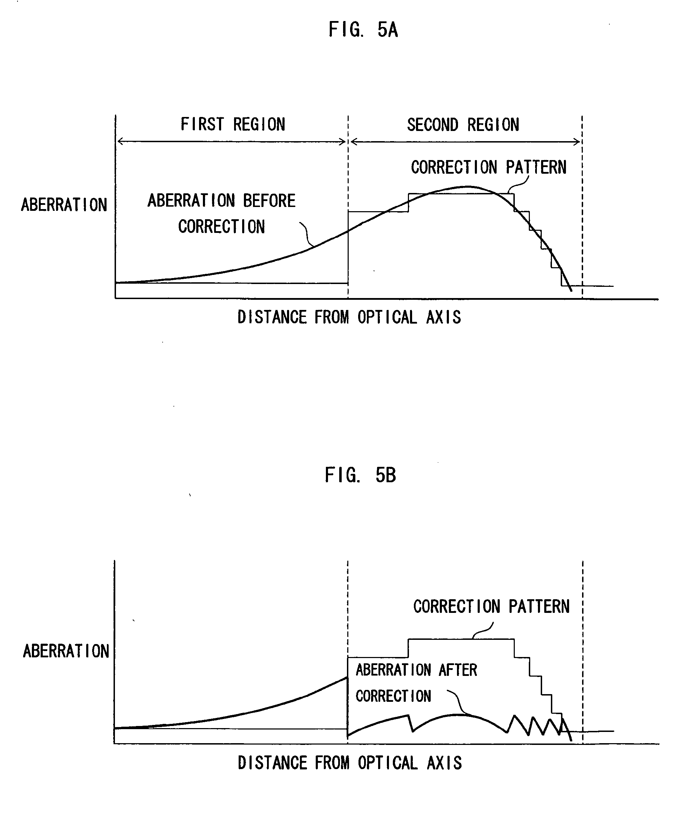

Fig. 5 is a view describing the correction of spherical aberration by the phase shift pattern of the second region Y. The heavy solid line of Fig. 5A shows the spherical aberration that occurs in the light beam when reproducing a BD. As shown in the figure, the spherical aberration becomes large at the outer peripheral side distant from the optical axis. Therefore, the degradation of reproduction quality caused by the spherical aberration can be suppressed by correcting the large spherical aberration that occurs mainly on the outer peripheral side. For this purpose, the number and area of the concentric region of the phase shift electrodes 67 in the second region Y should be set to values which can correct the spherical aberration that becomes larger towards the outer periphery. The thin solid line of Fig. 5A shows a correction pattern in a case where correcting the spherical aberration by adjusting the application voltage to be applied to each region, using a plurality of concentric regions which number and area of the region are determined as described above.

The heavy solid line of Fig. 5B shows the spherical aberration after correction by subtracting the correction pattern from the spherical aberration of Fig. 5A. Apparently, the spherical aberration can be reduced by performing the correction of changing the phase distribution in the second region Y. Hence, even in a case of a BD including a plurality of recording layers, the correction of the spherical aberration can be easily performed by voltage control of the phase shift electrodes 67.

Thus, the correction of spherical aberration and ensuring of working distance can be realized for a CD, and correction of spherical aberration can be achieved even for a BD having a plurality of recording layers with one liquid crystal element by using the liquid crystal element 6 including the diffraction electrode 66 and the phase shift electrode 67.

The correction of spherical aberration with respect to a DVD is performed by the phase shift element 7. The phase shift element 7 is not essential in the present invention, and thus will only be briefly described below. The phase shift element 7 has a phase shift region formed by a step difference formed in step-form on a transparent substrate, where the phase distribution changes as difference is created in passing time of the light beam in each phase shift region. The spherical aberration can be corrected by change in phase distribution. An opening restricting part may be arranged as needed in the phase shift element 7. The light beam for a CD and the light beam for a BD transmit through the phase shift element 7 as it is without being subjected to optical effect by the element 7.

The above description is disclosed in the aforementioned previous application. However, in the previous invention, only the diffraction electrode 66 of the first region X is driven when reproducing a CD, and only the phase shift electrode 67 of the second region Y is driven when reproducing a BD. The present invention, on the other hand, has features in that the diffraction electrode 66 of the first region X is also driven when reproducing a BD.

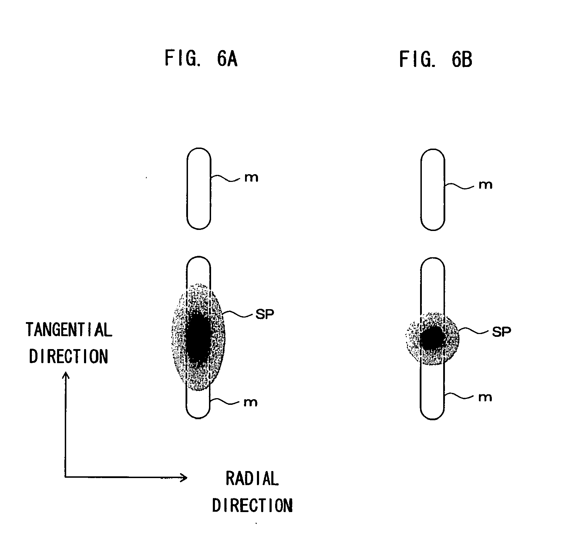

If voltage is not applied to the diffraction electrode 66 when reproducing a BD, the optical spot collected on the disc generally becomes an elliptical optical spot SP as shown in Fig. 6A, where m represents a mark formed on the disc surface. When voltage is applied to the diffraction electrode 66 when reproducing a BD, the light beam (blue laser light) diffracts and diverges by the diffraction effect, whereby the light transmissivity of the first region X lowers. The intensity of light at the central portion thus lowers, and the optical spot collected on the disc through the objective lens 8 becomes a circular optical spot SP of small size as shown in Fig. 6B. In this manner, a satisfactory reproduction signal can be obtained and reproduction performance can be enhanced by shaping the optical spot SP formed on the disc. This is the same for recording.

The number of components increases and thus cost increases when liquid crystal element and other optical members are separately used to lower the intensity of the light at the central portion of the first region X, while the number of components does not increase and increase in cost can be suppressed in the present invention since the optical spot when reproducing a BD is shaped using diffraction pattern for correcting aberration of a CD.

The value of the voltage to be applied to the diffraction electrodes 66 is determined so that the diffraction efficiency becomes a maximum when recording and reproducing a CD. The value of the voltage to be applied to the diffraction electrodes 66 is determined so that the transmissivity in the first region X becomes an appropriate amount when recording and reproducing a BD.

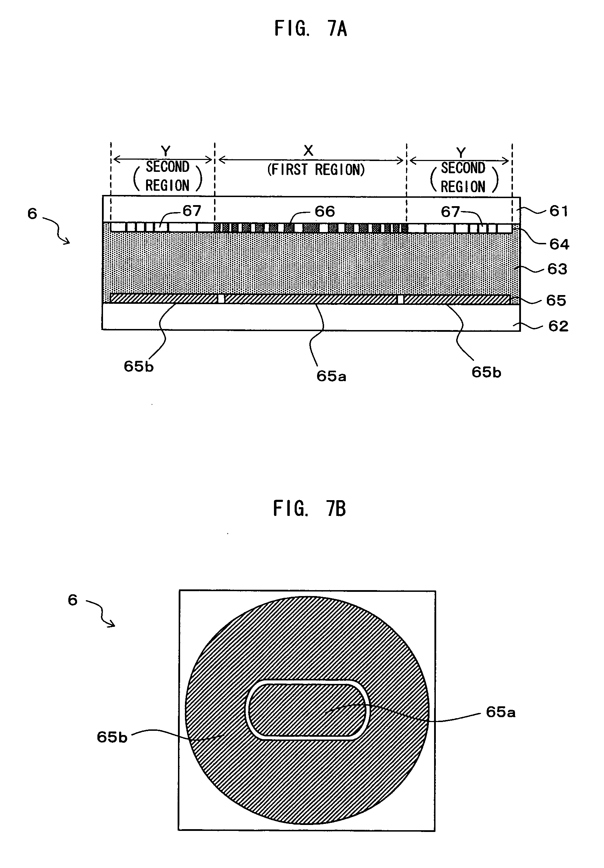

Fig. 7 is a view showing the liquid crystal element 6 according to another embodiment of the present invention. Same reference numerals as in Figs. 2 and 3 are denoted for the same portions in Fig. 7. Fig. 7A is a cross sectional view of the liquid crystal element 6, and Fig. 7B is a bottom view of the liquid crystal element 6. The top view of the liquid crystal element 6 is the same as Fig. 3A, and thus the illustration thereof is not given.

In the present embodiment, the common electrode 65 is divided into a first electrode 65a and a second electrode 65b. The electrodes 65a, 65b are electrically separated, and voltage is independently applied to each electrode. The first electrode 65a is an electrode having a small area arranged facing the diffraction electrode 66, and the second electrode 65b is an electrode having a large area arranged so as to surround the first electrode 65a.

When reproducing a CD, the voltage is applied between the first electrode 65a and the second electrode 65b, and the diffraction electrode 66, so that both electrodes 65a, 65b have the same function as the common electrode 65 in a case of Fig. 2. When reproducing a BD, voltage is applied between the first electrode 65a and the diffraction electrode 66, while voltage is not applied between the second electrode 65b and the diffraction electrode 66. Thus, the diffraction of light beam occurs only near the middle of the first region X. Therefore, according to the present embodiment, only the necessary portion in the common electrode 65 can be selected and driven, thereby a design to shape the light beam more efficiently can be carried out.

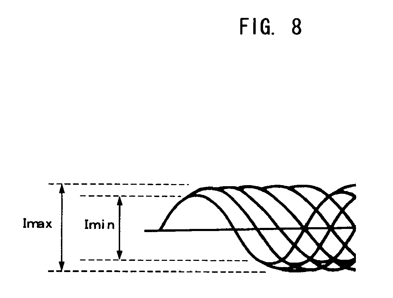

Table 1 shows the result of simulation performed to verify the effect of the present invention. In the simulation, the spot diameter and the resolution are obtained for the elongate optical spot SP as in Fig. 6A assuming that the divergent angle α (Fig. 4) of the light beam when reproducing a BD is α = 5.7° and the diffraction efficiency in the first region X is 50% (transmissivity is 50%). The rad direction of the spot diameter represents the radial direction (diameter direction of the disc) in Fig. 6, and the tan direction represents the tangential direction (peripheral direction of disc) in Fig. 6. The resolution is calculated by Imin/Imax, where Imax is the longest pit reproduction signal amplitude and Imin is the shortest pit reproduction signal amplitude in the reproduction signal shown in Fig. 8.

**[Table 1]**

| | Spot Diameter | | Resolution |
|---|---|---|---|
| | rad Direction | tan Direction | |
| First Embodiment (Fig. 2) | 0.2251 µm | 0.3207 µm | 6.06% |
| Second Embodiment (Fig. 7) | 0.2330 µm | 0.3226 µm | 5.48% |
| Comparative Example | 0.2418 µm | 0.3310 µm | 4.34% |

In Table 1, the simulation result of First Embodiment is data when the diffraction electrodes 66 of the first region X are driven in reproducing a BD using the liquid crystal element 6 shown in Fig. 2, where diameter Φ (see Fig. 3A) of the first region X is Φ = 2.4 mm. The simulation result of Second Embodiment is data when the diffraction electrodes 66 of the first region X are driven in reproducing a BD using the liquid crystal element 6 shown in Fig. 7, where dimension of the first electrode 65a in Fig. 7B is 1 mm × 2.4 mm. The simulation result of the Comparative Example is data when the diffraction electrodes 66 of the first region X are not driven in reproducing a BD.

As apparent from Table 1, the spot diameter of the light beam can be reduced and thus the resolution is enhanced by driving the diffraction electrodes 66 when reproducing a BD as in the present invention, as compared with a case of not driving the diffraction electrodes 66.

The simulation is not performed for the optical spot that is horizontally long in the radial direction of Fig. 6. In a case of horizontally long optical spot, the enhancement in resolution cannot be greatly expected, but cross talk from the adjacent track can be suppressed by reducing the spot diameter.

In the above embodiments, an example of optical pickup 100 compatible to three wavelengths that can correspond to three types of optical discs such as a CD, a DVD, and a BD has been described, but the present invention is also applicable to other optical pickups. For instance, the present invention can be applied to an optical pickup compatible to two wavelengths that can correspond to two types of optical disc such as a CD and a BD, or a DVD and a BD.

## Claims

1. An optical pickup comprising:
a plurality of light sources for projecting light beams having different frequencies to at least two types of optical disc;
an objective lens for collecting the light beam projected from each light source onto a disc surface of each optical disc; and
a liquid crystal element for correcting spherical aberration arranged in front of the objective lens when seen from the light source; wherein
the liquid crystal element includes diffraction electrodes for converting the light beam to divergent light when reproducing the optical disc in which numerical aperture used is small, and phase shift electrodes for providing a phase difference to the light beam when reproducing the optical disc in which numerical aperture used is large, and
voltage is applied to the diffraction electrodes as well as the phase shift electrodes when reproducing the optical disc in which numerical aperture used is large.

2. The optical pickup according to claim 1, wherein
a common electrode facing the diffraction electrodes and the phase shift electrodes is arranged,
the common electrode includes a first electrode facing the diffraction electrodes, and a second electrode arranged so as to surround the first electrode, and
voltage is applied between the first electrode and the diffraction electrodes when reproducing the optical disc in which numerical aperture used is large.

3. An optical pickup comprising:
a plurality of light sources for projecting light beams having different frequencies to each optical disc of a CD, a DVD, and a BD;
an objective lens for collecting the light beam projected from each light source onto a disc surface of the each optical disc; and
a liquid crystal element for correcting spherical aberration arranged in front of the objective lens when seen from the light source; wherein
the liquid crystal element includes diffraction electrodes having a concentric diffraction pattern arranged in a first region on the inner side, phase shift electrodes having a concentric region arranged in a second region on the outer side, and a common electrode facing the diffraction electrodes and the phase shift electrodes,
when reproducing the CD, same voltage is applied between each diffraction electrode and the common electrode to diffract the light beam entering the first region and convert the light beam to a divergent light diverged by a predetermined angle, and
when reproducing the BD, voltage is individually applied between each region of the phase shift electrode and the common electrode to provide a phase difference to the light beam passing through the region while changing an index of refraction in each region, and a predetermined voltage is applied between the diffraction electrodes and the common electrode to lower a light transmissivity of the first region and shape an optical spot formed on the disc.
